# EUROPEAN PATENT APPLICATION

(11) **EP 4 741 717 A1**
(43) Date of publication of application: **13.05.2026**
(21) Application number: 24850673.5
(22) Date of filing: 17.06.2024
(51) Int. Cl.: F24C 15/20

(54) **OIL FUME PURIFIER AND RANGE HOOD USING SAME**

(30) Priority: 08.08.2023 CN 202322126177 U
(71) Applicant: Guangdong Arcair Appliance Co., Ltd., Guangdong 528318 (CN)
(72) Inventor: KANG, Zuotian, Foshan, Guangdong 528318 (CN); TANG, Haijiang, Foshan, Guangdong 528318 (CN); LIN, Zhuojun, Foshan, Guangdong 528318 (CN)
(74) Representative: Murgitroyd & Company
(86) International application number: PCT/CN2024/099626
(87) International publication number: WO 2025/031021

(57) **Abstract**

The present disclosure provides an oil fume purifier, and also provides a range hood with the oil fume purifier. The oil fume purifier includes: a housing, where an accommodating space is formed inside the housing, and an air inlet and plural air outlets in communication with the accommodating space are opened on the housing, and the air inlet and the air outlets are not oriented in a same straight line direction; a filtering molecular sieve, where each air outlet is provided with the filtering molecular sieve; an ionization ozone generation mechanism, mounted in the housing; an electric control assembly, mounted on the housing, where the electric control assembly is electrically connected with the ionization ozone generation mechanism. The oil fume purifier features simple entire structure and its volume can be sized based on use requirements. During mounting process, it can be used by simply connecting the external oil fume device with the air inlet, leading to convenient mounting.

## Description

### TECHNICAL FIELD

The present disclosure relates to purifying devices and in particular to an oil fume purifier and a range hood applying the same.

### BACKGROUND

The oil fume purifier can purify oil fume to remove hazardous substances in the oil fume. For example, the substances such as PM2.5, benzene and bacteria and the like in the oil fume can be removed by the oil fume purifier so that the air exhausted from the oil fume purifier is cleaner and safer. However, the existing oil fume purifiers have complex structure and large size, which brings inconvenience to placement and use, lowering the user experience.

### SUMMARY

The present disclosure aims to, at least to some extent, address one of the technical problems in the prior arts. For this reason, the present disclosure provide an oil fume purifier.

In order to achieve the above purpose, the technical solution of the present disclosure is as follows.

The present disclosure further provides a range hood with the above oil fume purifier.

According to a first aspect of embodiments of the present disclosure, the oil fume purifier includes:
a housing, where an accommodating space is formed inside the housing, an air inlet and plural air outlets in communication with the accommodating space are opened on the housing, and the air inlet and the air outlets are not oriented in a same straight line direction;
a filtering molecular sieve, having honeycomb-distributed through holes, where each air outlet is provided with the filtering molecular sieve;
an ionization ozone generation mechanism, mounted in the accommodating space;
an electric control assembly, mounted on the housing, where the electric control assembly is electrically connected with the ionization ozone generation mechanism.

The oil fume purifier according to the embodiments of the present disclosure at least has the following beneficial effects: the oil fume purifier features simple entire structure and its volume can be sized based on use requirements. During mounting process, it can be used by simply connecting the external oil fume device with the air inlet, leading to convenient mounting.

According to some embodiments of the present disclosure, plural air outlets are opened along a perimeter sidewall of the housing, the air outlets surround the ionization ozone generation mechanism, and directions in which the air inlet and the air outlets are oriented respectively are mutually perpendicular.

According to some embodiments of the present disclosure, the electric control assembly includes a fixing seat, an electric control board, a plug socket, and an indicator lamp; the fixing seat is mounted on a side surface of the housing opposite to the air inlet, a body of the fixing seat protrudes into the accommodating space, and the ionization ozone generation mechanism is mounted on an outer wall of the fixing seat.

According to some embodiments of the present disclosure, a boss portion protruding toward the air inlet is provided on the fixing seat, the ionization ozone generation mechanism is mounted on an outer wall of the bottom of the boss portion, and the bottom of the boss portion is in a virtual extension direction in which the air outlets are oriented toward the interior of the accommodating space.

According to some embodiments of the present disclosure, the filtering molecular sieves are a zeolite molecular sieve or activated carbon molecular sieve.

According to some embodiments of the present disclosure, an air intake seat is mounted on an outer side of the housing, the air intake seat is disposed to surround the air inlet, and an air intake necked down toward the air inlet is provided on the air intake seat

According to some embodiments of the present disclosure, a snap-fitting groove is disposed on an inner wall of the housing on both sides of the air outlets; one group of opposite sides of the filtering molecular sieves are slidably connected into the snap-fitting grooves, and the other group of opposite sides of the filtering molecular sieves are fixedly clamped in the housing.

According to some embodiments of the present disclosure, the fixing seat of the electric control assembly extends out to form first support walls, the inner wall of the housing opposite to the electric control assembly extends out to form second support walls, and the other group of opposite sides of the filtering molecular sieves are fixedly clamped between the first support walls and the second second support walls.

According to some embodiments of the present disclosure, the electric control assembly further includes an air velocity sensor used to sense an air flow of the accommodating space so that the electric control assembly controls a working voltage of the ionization ozone generation mechanism.

According to a second aspect of some embodiments of the present disclosure, there is provided a range hood applying the oil fume purifier. The air inlet of the oil fume purifier is connected with a fume suction end or fume exhaust end of the range hood.

The range hood according to the embodiments of the present disclosure at least has the following beneficial effects: with the oil fume purifier, the oil fume can be purified before the range hood exhausts the oil fume or sucks the oil fume, so that the oil fume to be exhausted out of room or outdoors is clean.

The additional aspects and advantages of the present disclosure will be partly given in the following descriptions and partly become obvious from the following descriptions or be understood from the practice of the present disclosure.

### BRIEF DESCRIPTION OF THE DRAWINGS

The above and/or additional aspects and advantages of the present disclosure will become obvious and understandable in the descriptions made to the embodiments in combination with following drawings.
FIG. 1 is a schematic diagram of structure assembling of the present disclosure.
FIG. 2 is a schematic diagram of structure breakdown of the present disclosure.
FIG. 3 is a sectional view of an internal structure of FIG. 1.
FIG. 4 is a structural schematic diagram of a housing.
FIG. 5 is an assembling schematic diagram of an electric control assembly and an ionization ozone generation mechanism.

Numerals of drawings: housing 100; accommodating space 101; air inlet 102; air outlet 103; snap-fitting groove 104; second support wall 105; filtering molecular sieve 200; ionization ozone generation mechanism 300; electric control assembly 400; fixing seat 410; boss portion 411; first support wall 412; electric control board 420; plug socket 403; indicator lamp 440; air velocity sensor 450; air intake seat 500; and air intake 510.

### DETAILED DESCRIPTION OF THE EMBODIMENTS

The The embodiments of the present disclosure will be detailed below, with the examples of the embodiments illustrated in the drawings. Same or like numerals represent same or like elements or elements with same or like functions throughout the specification. The embodiments described below by referring to the drawings below are illustrative and used only to interpret the present disclosure and shall not be understood as limiting of the present disclosure.

The present disclosure provides an oil fume purifier, including a housing 100, a filtering molecular sieve 200, a high-voltage power ionization ozone generation mechanism 300 and an electric control assembly 400.

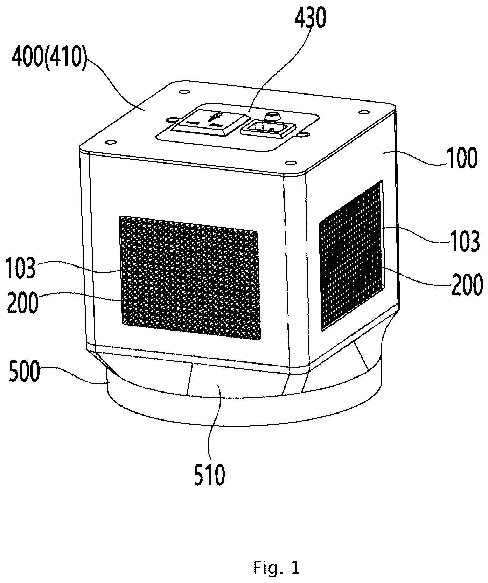

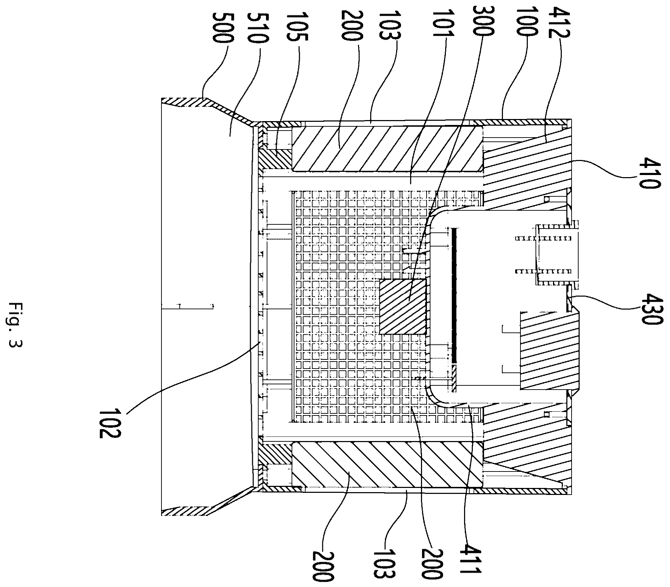

With reference to FIGS. 1, 2, and 3, the interior of the housing 100 is hollow and formed into an accommodating space 101, and an air inlet 102 and plural air outlets 103 are opened on the housing 100. The air inlet 102 and each air outlet 103 are both in communication with the accommodating space 101. In the direction shown, the air inlet 102 is opened at a bottom of the housing 100, and the air inlet 102 is oriented in vertical direction. The air outlets 103 are opened on a perimeter sidewall of the housing 100, and the air outlets 103 are oriented in horizontal direction. The air inlet 102 and the air outlets 103 are not oriented in a same straight line direction. Preferably, the directions in which the air inlet 102 and the air outlets 103 are oriented respectively are mutually perpendicular. The filtering molecular sieve 200 is mounted at each air outlet 103. The filtering molecular sieve 200 preferably is a zeolite molecular sieve or activated carbon molecular sieve or is made of a material such as cordierite capable of adsorbing odorous gases such as ozone. The filtering molecular sieve 200 is in square shape, a middle part of which is honeycomb-distributed with plural through holes with uniform size. The ionization ozone generation mechanism 300 is mounted in the accommodating space 101. The electric control assembly 400 is mounted on the housing 100. The ionization ozone generation mechanism 300 is electrically connected with the electric control assembly 400 so that the electric control assembly 400 is used to control startup and shutdown of the ionization ozone generation mechanism 300.

During use, the gas with oil fume flows from the air inlet 102 into the accommodating space 101 under the action of external air pressure. At this time, the ionization ozone generation mechanism 300 is started, and the ionization ozone generation mechanism 300 can ionize the air to form ozone. Ozone is a strong oxidant capable of damaging and decomposing cell walls of the bacteria to diffuse into the cells and oxidize and decompose glucose oxidase and so on required by the bacteria to oxidize glucose, and also directly acting on the bacteria and viruses to damage metabolism and reproduction process of the bacteria.Furthermore, ozone can oxidize various inorganic or organic substances with odors. For example, ozone can decompose the odorous gases such as ammonia gas, benzene and hydrogen sulfide and the like, so as to achieve odor removing effect. Ozone features short time and strong effect in sterilization, disinfection and odor removal. The ozone formed by ionizing the air by the ionization ozone generation mechanism 300 can be used to remove the odors in the oil fume, achieving good effect. The oil fume is purified in the accommodating space 101, and then flows from the vertical flow direction toward the air outlets 103. The direction-changing flow of the oil fume in the accommodating space 101 increases a stay time of the oil fume in the accommodating space 101, and thus the oil fume can be purified more completely under the action of the ionization ozone generation mechanism 300. Before the oil fume is exhausted from the air outlets 103, the oil fume flows through the through holes of the filtering molecular sieves 200, and various fluid molecules can be screened based on the effective hole size of the filtering molecular sieves 200. When a fluid with ozone and odors flows through, some ozone molecules in the fluid make irregular movement to hit an adsorbent surface of the through holes of the filtering molecular sieves 200 and are concentrated on the surface to reduce the number of the ozone molecules in the fluid, achieving the purpose of separating and removing ozone and odors, and effectively adsorbing the molecular structures of the organic substances and finally decomposing them. The gas with ozone decomposition is exhausted from the housing 100, making the fluid going through oil fume purification cleaner and ensuring the gas with ozone decomposition is not harmful to human. The filtering molecular sieves 200 have good odor adsorption performance without secondary pollution, and can be used at normal temperature or high temperature for long. The filtering molecular sieves 200 are uniform in hole size and are an ion adsorbent, which can perform selective adsorption based on molecule sizes and different polarities. Due to strong adsorption, it can still have adsorption effect in spite of a low composition concentration of the gas. After the oil fume gas is sterilized, disinfected and deodorized by the ionization ozone generation mechanism 300, the generated ozone is adsorbed by the filtering molecular sieves 200 again. Finally, the oil fume gas is exhausted to outside, making the exhausted gas cleaner.

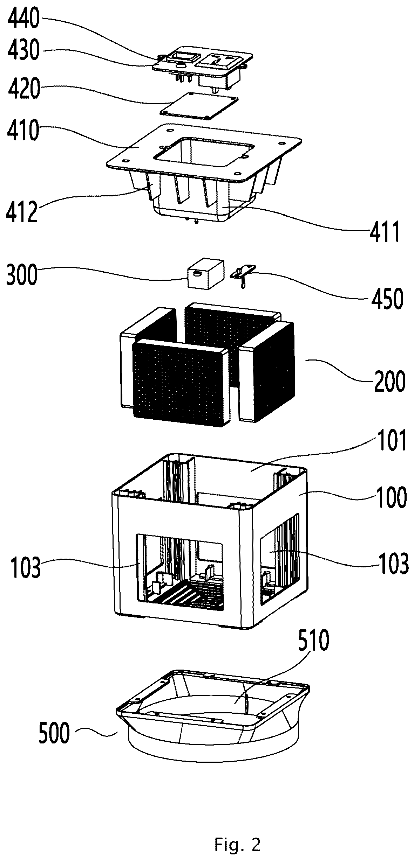

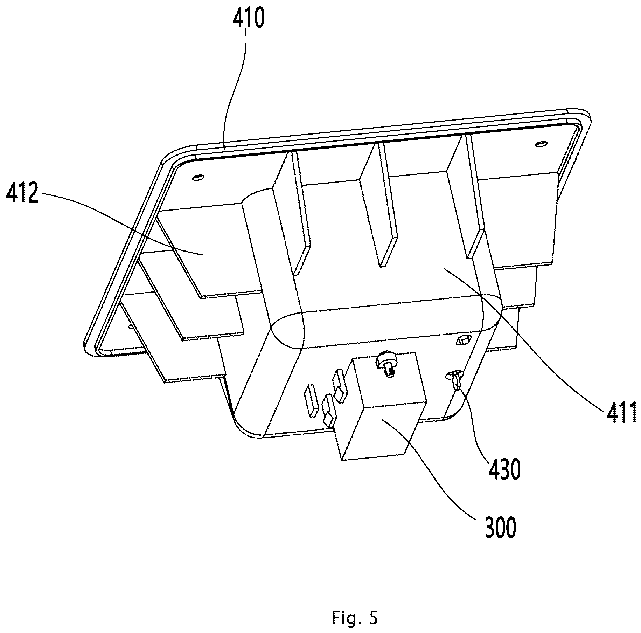

In some embodiments of the present disclosure, with reference to FIGS. 1, 2, 3, and 4, the housing 100 is a cubic box-like structure. The air outlets 103 are opened on the perimeter sidewall of the housing 100. The fume flows from the air inlet 102 at bottom into the accommodating space 101, and then flows through the filtering molecular sieves 200 around for purification. The air outlets 103 together with matching filtering molecular sieves 200 are disposed on the perimeter of the housing 100, which can effectively increase an entire exhaust gas quantity as well as a total adsorption area of the disposed filtering molecular sieves 200. Furthermore, with reference to FIGS. 2, 3 and 5, the electric control assembly 400 includes a fixing seat 410, an electric control board 420, a plug socket 430, and an indicator lamp 440. The electric control board 420, the plug socket 430, and the indicator lamp 440 are mounted on the fixing seat 410. The fixing seat 410 can be fixedly locked on the housing 100 by screws. The fixing seat 410 is opposite in position to the air inlet 102. In the direction shown, the air inlet 102 is located at the bottom of the housing 100, and the fixing seat 410 is mounted at the top of the housing 100. The ionization ozone generation mechanism 300 is located in the accommodating space 101 and fixed on an outer wall of the fixing seat 410. The air outlets 103 surround the ionization ozone generation mechanism 300. An airflow enters the accommodating space 101 from the air inlet 102, and then hits the outer wall of the fixing seat 410 and then spreads in all directions. An air intake seat 500 is provided with a boss portion 411 protruding into the accommodating space 101, and the boss portion 411 protrudes toward the air inlet 102. The ionization ozone generation mechanism 300 is mounted on an outer wall of the bottom of the boss portion 411 by snap fitting. The air outlets 103 around surround the boss portion 411, and the boss portion 411 is in a virtual extension direction of each air outlet 103 in a horizontal direction. The airflow spreads in all directions after hitting on the outer wall of the boss portion 411.

In some specific embodiments of the present disclosure, as shown in FIGS. 1, 2 and 3, an air intake seat 500 is mounted on an outer side of the housing 100. An air intake 510 of the air intake seat 500 is disposed to surround the air inlet 102. The air intake 510 is presented as necking-down shape in the direction from outside to the air inlet 102. The housing 100 can be connected with the external oil fume device through the air intake seat 500. The oil fume is conveyed from the air intake 510 of the air intake seat 500 into the air inlet 102.

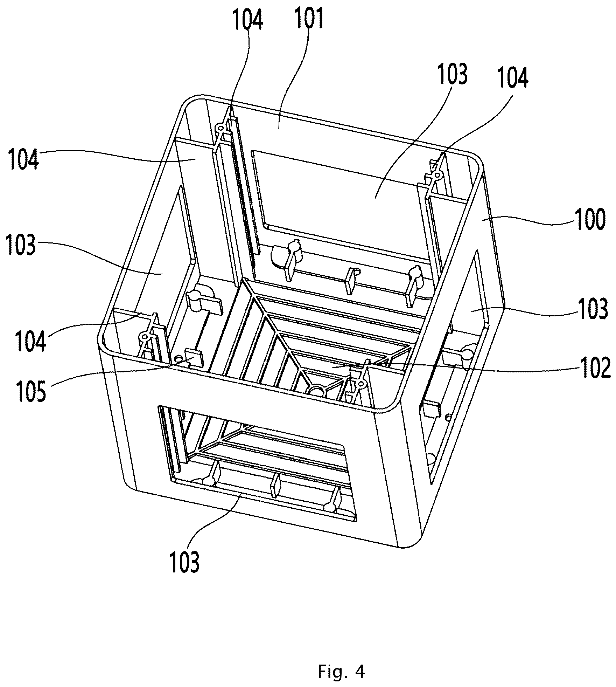

In some specific embodiments of the present disclosure, as shown in FIG. 4, a snap-fitting groove 104 extending vertically is disposed on both sides of each of the air outlets 103 in the housing 100. One group of opposite sides of the filtering molecular sieves 200 are slidably connected into the snap-fitting grooves 104 from top down, and the other group of opposite sides (upper and lower sides) of the filtering molecular sieves 200 are fixedly clamped in the housing 100. Specifically, the perimeter of the fixing seat 410 of the electric control assembly 400 extends downward to form first support walls 412, and the bottom of an inner wall of the housing 100 extends upwardly to form second support walls 105. For the first support walls 412 and the second support walls 105, the second support walls 105 support up the bottom of the filtering molecular sieves 200 and the first support walls 412 press down the top of the filtering molecular sieves 200. Thus, the upper and lower sides of the filtering molecular sieves 200 can be fixedly clamped by using the the first support walls 412 and the second support walls 105.

In some embodiments of the present disclosure, the electric control assembly 400 further includes an air velocity sensor 450 which is used to sense an air flow of the accommodating space 101. The air velocity sensor 450 feeds signals back to the electric control assembly 400 based on the size of the air flow, and further controls the working voltage of the ionization ozone generation mechanism 300, so as to change the content of the ionized ozone.

The present disclosure further provides a range hood applying the above oil fume purifier. The air inlet 102 of the oil fume purifier is connected with a fume suction end or fume exhaust end of the range hood. With the oil fume purifier, the oil fume can be purified before the range hood exhausts the oil fume or sucks the oil fume, so that the oil fume to be exhausted out of room or outdoors is clean.

The terms "first" and "second" are used only for the purpose of description and shall not be understood as indicating or implying relative importance or implicitly indicating the number of the indicated technical features. Therefore, the features limited by the "first" and "second" can explicitly or implicitly include one or more of the features. In the descriptions of the present disclosure, "plural" means at least two, for example, two or three or the like, unless otherwise defined clearly.

In the present disclosure, unless otherwise stated or defined clearly, the terms "mount", "connect", "couple", and "fix" and the like shall be understood in broad sense, for example, can be fixed connection, or detachable connection, or integral connection; or can be mechanical connection, or electrical connection; or can be direct connection, or connection through intermediate medium, or internal communication between two elements or interaction of two elements. Persons of ordinary skills in the arts can understand the specific meanings of the above terms in the present disclosure based on specific situations.

In the descriptions of the present disclosure, the descriptions made by referring to the terms "some specific embodiments" and the like mean that the specific features, structures, materials or characteristics described in combination with the embodiments or examples are included in at least one embodiment or example of the present disclosure. In the present disclosure, the illustrative expressions for the above terms do not necessarily refer to same embodiment or example. Furthermore, the described specific features, structures, materials or characteristics can be combined properly in one or more embodiments or examples.

Although the embodiments of the present disclosure have already been illustrated and described, persons of ordinary skills in the arts can understand that they can make various changes, modifications, replacements and variations to these embodiments without departing from the principle and tenet of the present disclosure, and the scope of the present disclosure is limited by claims and its equivalents.

## Claims

1. An oil fume purifier, comprising:
a housing (100), wherein an accommodating space (101) is formed inside the housing (100), an air inlet (102) and plural air outlets (103) in communication with the accommodating space (101) are opened on the housing (100), and the air inlet (102) and the air outlets (103) are not oriented in a same straight line direction;
a filtering molecular sieve (200), having honeycomb-distributed through holes, wherein each air outlet (103) is provided with the filtering molecular sieve (200);
an ionization ozone generation mechanism (300), mounted in the accommodating space (101);
an electric control assembly (400), mounted on the housing (100), wherein the electric control assembly (400) is electrically connected with the ionization ozone generation mechanism (300).

2. The oil fume purifier according to claim 1, wherein plural air outlets (103) are opened along a perimeter sidewall of the housing (100), the air outlets (103) surround the ionization ozone generation mechanism (300), and directions in which the air inlet (102) and the air outlets (103) are oriented respectively are mutually perpendicular.

3. The oil fume purifier according to claim 2, wherein the electric control assembly (400) comprises a fixing seat (410), an electric control board (420), a plug socket (430), and an indicator lamp (440), the fixing seat (410) is mounted on a side surface of the housing (100) opposite to the air inlet (102), a body of the fixing seat (410) protrudes into the accommodating space (101), and the ionization ozone generation mechanism (300) is mounted on an outer wall of the fixing seat (410).

4. The oil fume purifier according to claim 3, wherein a boss portion (411) protruding toward the air inlet (102) is provided on the fixing seat (410), the ionization ozone generation mechanism (300) is mounted on an outer wall of a bottom of the boss portion (411), and the bottom of the boss portion (411) is in a virtual extension direction in which the air outlets (103) are oriented toward the interior of the accommodating space (101).

5. The oil fume purifier according to claim 1, wherein the filtering molecular sieves (200) are a zeolite molecular sieve or activated carbon molecular sieve.

6. The oil fume purifier according to claim 1, wherein an air intake seat (500) is mounted on an outer side of the housing (100), the air intake seat (500) is disposed to surround the air inlet (102), and an air intake (510) necked down toward the air inlet (102) is provided on the air intake seat (500).

7. The oil fume purifier according to claim 1, wherein a snap-fitting groove (104) is disposed on an inner wall of the housing (100) on both sides of the air outlets (103); one group of opposite sides of the filtering molecular sieves (200) are slidably connected into the snap-fitting grooves (104), and the other group of opposite sides of the filtering molecular sieves (200) are fixedly clamped in the housing (100).

8. The oil fume purifier according to claim 7, wherein the fixing seat (410) of the electric control assembly (400) extends out to form first support walls (412), the inner wall of the housing (100) opposite to the electric control assembly (400) extends out to form second support walls (105), and the other group of opposite sides of the filtering molecular sieves (200) are fixedly clamped between the first support walls (412) and the second second support walls (105).

9. The oil fume purifier according to claim 1, wherein the electric control assembly (400) further comprises an air velocity sensor (450) used to sense an air flow of the accommodating space (101) so that the electric control assembly (400) controls a working voltage of the ionization ozone generation mechanism (300).

10. A range hood, applying the oil fume purifier according to any one of claims 1 to 9, wherein the air inlet (102) of the oil fume purifier is connected with a fume suction end or fume exhaust end of the range hood.
